# EUROPEAN PATENT APPLICATION

(11) **EP 3 737 138 A1**
(43) Date of publication of application: **11.11.2020**
(21) Application number: 18898946.1
(22) Date of filing: 04.01.2018
(51) Int. Cl.: H04W 16/28

(54) **CONFIGURATION AND INDICATION METHOD AND DEVICE FOR BEAM FAILURE RECOVERY, AND COMMUNICATION SYSTEM**

(71) Applicant: FUJITSU LIMITED, Kanagawa 211-8588 (JP)
(72) Inventor: JIA, Meiyi, Beijing 100027 (CN); SHI, Yulong, Beijing 100027 (CN); ZHANG, Lei, Beijing 100027 (CN)
(74) Representative: Haseltine Lake Kempner LLP
(86) International application number: PCT/CN2018/071358
(87) International publication number: WO 2019/134092

(57) **Abstract**

Configuration and indication methods and apparatuses for beam failure recovery and communication system. The method includes: receiving by a terminal equipment a measurement threshold and a measurement parameter used for beam failure recovery and transmitted by a network device, or transmitting by a terminal equipment indication information used for mobility robustness optimization to a network device. Hence, the terminal equipment is able to obtain an accurate beam measurement result, and unsuccessful beam failure recovery may be reduced.

## Description

### Technical Field

This disclosure relates to the field of communication technologies, and in particular to configuration and indication methods and apparatuses for beam failure recovery and a communication system.

### Background

In a new radio (NR) system of the fifth generation (5G) communication, in order to support communications at higher frequencies, a concept of beam is introduced. Accordingly, the NR system supports beam-related operations, such as beam management, including beam determination, beam measurement, and beam reporting. After the introduction of the concept of beam, compared with cell-level operations, more elaborate processing is required, including beam measurement, etc.

It should be noted that the above description of the background art is merely provided for clear and complete explanation of this disclosure and for easy understanding by those skilled in the art. And it should not be understood that the above technical solution is known to those skilled in the art as it is described in the background art of this disclosure.

### Summary

It was found by the inventors that in order to support beam failure recovery, a network device is required to perform accurate parameter configuration. However, filtering a measurement result in a physical layer is implemented based on a terminal equipment, and is not specified by a protocol or standard. And if the network device only configures a measurement threshold, it may be insufficient for the terminal equipment to accurately obtain candidate beams for beam failure recovery.

Embodiments of this disclosure provide configuration and indication methods and apparatuses for beam failure recovery and communication system. It is expected that the terminal equipment is able to obtain an accurate measurement result according to the configuration of the network device, and unsuccessful beam failure recovery may be reduced.

According to a first aspect of the embodiments of this disclosure, there is provided a configuration method for beam failure recovery, including:
receiving by a terminal equipment a measurement threshold and a measurement parameter used for beam failure recovery and transmitted by a network device; and
measuring and/or evaluating a to-be-evaluated beam based on the measurement threshold and the measurement parameter.

According to a second aspect of the embodiments of this disclosure, there is provided a configuration apparatus for beam failure recovery, including:
a configuration receiving unit configured to receive a measurement threshold and a measurement parameter used for beam failure recovery and transmitted by a network device; and
a beam processing unit configured to measure and/or evaluate a to-be-evaluated beam based on the measurement threshold and the measurement parameter.

According to a third aspect of the embodiments of this disclosure, there is provided an indication method for beam failure recovery, including:
determining by a terminal equipment that a beam failure occurs therein; and
transmitting indication information used for mobility robustness optimization by the terminal equipment to a network device.

According to a fourth aspect of the embodiments of this disclosure, there is provided an indication apparatus for beam failure recovery, including:
a failure determining unit configured to determine that a beam failure occurs in a terminal equipment; and
an information transmitting unit configured to transmit indication information used for mobility robustness optimization to a network device.

According to a fifth aspect of the embodiments of this disclosure, there is provided a communication system, including:
a terminal equipment, including the configuration apparatus for beam failure recovery as described in the second aspect, or the indication apparatus for beam failure recovery as described in the fourth aspect.

An advantage of the embodiments of this disclosure exists in that the terminal equipment receives the measurement threshold and the measurement parameter used for beam failure recovery and transmitted by the network device, or the terminal equipment transmits the indication information used for mobility robustness optimization to the network device. Hence, the terminal equipment is able to obtain an accurate beam measurement result, and unsuccessful beam failure recovery may be reduced.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprise/include" when used in this specification is taken to specify the presence of stated features, integers, steps or components but does not preclude the presence or addition of one or more other features, integers, steps, components or groups thereof.

### Brief Description of the Drawings

Elements and features depicted in one drawing or embodiment of the invention may be combined with elements and features depicted in one or more additional drawings or embodiments. Moreover, in the drawings, like reference numerals designate corresponding parts throughout the several views and may be used to designate like or similar parts in more than one embodiment.
FIG. 1 is a schematic diagram of a communication system of an embodiment of this disclosure;
FIG. 2 is a schematic diagram of a beam failure recovery process of an embodiment of this disclosure;
FIG. 3 is a schematic diagram of the configuration method for beam failure recovery of Embodiment 1 of this disclosure;
FIG. 4 is another schematic diagram of the configuration method for beam failure recovery of Embodiment 1 of this disclosure;
FIG. 5 is a schematic diagram of the indication method for beam failure recovery of Embodiment 2 of this disclosure;
FIG. 6 is another schematic diagram of the indication method for beam failure recovery of Embodiment 2 of this disclosure;
FIG. 7 is a schematic diagram of the configuration apparatus for beam failure recovery of Embodiment 3 of this disclosure;
FIG. 8 is another schematic diagram of the configuration apparatus for beam failure recovery of Embodiment 3 of this disclosure;
FIG. 9 is a schematic diagram of the indication apparatus for beam failure recovery of Embodiment 4 of this disclosure;
FIG. 10 is another schematic diagram of the indication apparatus for beam failure recovery of Embodiment 4 of this disclosure;
FIG. 11 is a schematic diagram of the network device of Embodiment 5 of this disclosure; and
FIG. 12 is a schematic diagram of the terminal equipment of Embodiment 5 of this disclosure.

### Detailed Description of the Invention

These and further aspects and features of this disclosure will be apparent with reference to the following description and attached drawings. In the description and drawings, particular embodiments of the invention have been disclosed in detail as being indicative of some of the ways in which the principles of the invention may be employed, but it is understood that the invention is not limited correspondingly in scope. Rather, the invention includes all changes, modifications and equivalents coming within the terms of the appended claims.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of' or "a type of' in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In the embodiments of this disclosure, the term "communication network" or "wireless communication network" may refer to a network satisfying any one of the following communication standards: long term evolution (LTE), long term evolution-advanced (LTE-A), wideband code division multiple access (WCDMA), and high-speed packet access (HSPA), etc.

And communication between devices in a communication system may be performed according to communication protocols at any stage, which may, for example, include but not limited to the following communication protocols: 1G (generation), 2G, 2.5G, 2.75G, 3G, 4G, 4.5G, and 5G and new radio (NR) in the future, etc., and/or other communication protocols that are currently known or will be developed in the future.

In the embodiments of this disclosure, the term "network device", for example, refers to an equipment in a communication system that accesses a terminal equipment to the communication network and provides services for the terminal equipment. The network device may include but not limited to the following equipment: a base station (BS), an access point (AP), a transmission reception point (TRP), a broadcast transmitter, a mobile management entity (MME), a gateway, a server, a radio network controller (RNC), a base station controller (BSC), etc.

The base station may include but not limited to a node B (NodeB or NB), an evolved node B (eNodeB or eNB), and a 5G base station (gNB), etc. Furthermore, it may include a remote radio head (RRH), a remote radio unit (RRU), a relay, or a low-power node (such as a femto, and a pico, etc.). The term "base station" may include some or all of its functions, and each base station may provide communication coverage for a specific geographical area. And a term "cell" may refer to a base station and/or its coverage area, which is dependent on a context of the term.

In the embodiments of this disclosure, the term "user equipment (UE)" or "terminal equipment (TE)" refers to, for example, equipment accessing to a communication network and receiving network services via a network device. The user equipment may be fixed or mobile, and may also be referred to as a mobile station (MS), a terminal, a subscriber station (SS), an access terminal (AT), or a station, etc.

The terminal equipment may include but not limited to the following devices: a cellular phone, a personal digital assistant (PDA), a wireless modem, a wireless communication device, a hand-held device, a machine-type communication device, a lap-top, a cordless telephone, a smart cell phone, a smart watch, and a digital camera, etc.

For another example, in a scenario of the Internet of Things (IoT), etc., the user equipment may also be a machine or a device performing monitoring or measurement. For example, it may include but not limited to a machine-type communication (MTC) terminal, a vehicle mounted communication terminal, a device to device (D2D) terminal, and a machine to machine (M2M) terminal, etc.

Furthermore, the term "a network side" or "a network device side" refers to a side at a network, may be a base station, and may include one or more of the above network devices. And the term "a user equipment side" or "a terminal equipment side" refers to a side at a user equipment or a terminal equipment, may be a user equipment, and may include one or more of the above terminal equipments.

Scenarios in the embodiments of this disclosure shall be described below by way of examples; however, this disclosure is not limited thereto.

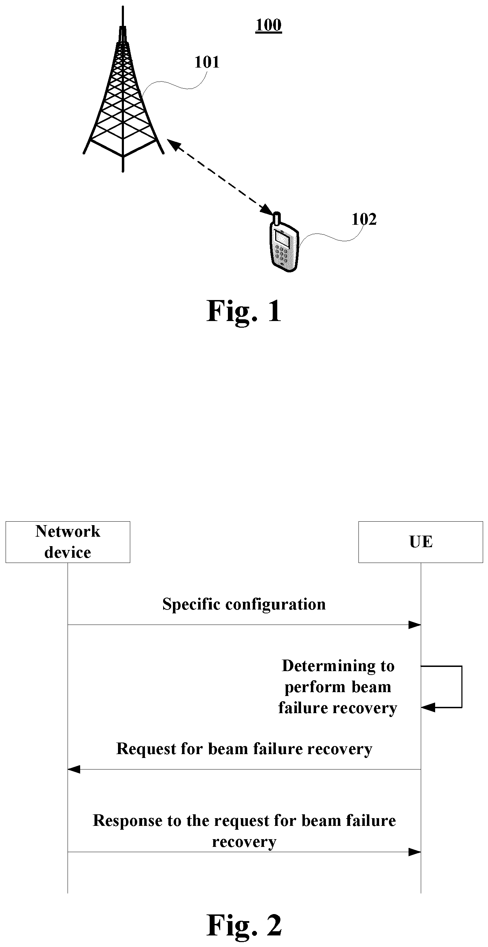

FIG. 1 is a schematic diagram of a communication system of an embodiment of this disclosure, in which a case where a terminal equipment and a network device are taken as examples is schematically shown. As shown in FIG. 1, a communication system 100 may include a network device 101 and a terminal equipment 102. An example having one terminal equipment and a network device is schematically given in FIG. 1; however, the embodiment of this disclosure is not limited thereto.

In the embodiment of this disclosure, existing traffics or traffics that may be implemented in the future may be performed between the network device 101 and the terminal equipment 102. For example, such traffics may include but not limited to an enhanced mobile broadband (eMBB), massive machine type communication (MTC), and ultra-reliable and low-latency communication (URLLC), etc.

An autonomous recovery mechanism of a terminal equipment (also referred to as a user equipment), i.e. a beam failure recovery mechanism, is introduced in NR system. For example, after the terminal equipment enters a connected state, the network device will provide dedicated configuration for the terminal equipment. According to the dedicated configuration transmitted by the network device, when a beam failure occurs and a candidate beam exists, the terminal equipment may transmit a beam failure recovery request by using a resource provided in the dedicated configuration or a contention-based resource, and wait for feedback from the network device within a reception time window provided in the dedicated configuration at a configured resource position. If the feedback of the network device is received within the reception time window, it may be considered that a beam failure recovery procedure is successful, otherwise, it may be considered that the beam failure recovery procedure fails.

FIG. 2 is a schematic diagram of the beam failure recovery procedure according to an embodiment of this disclosure. As shown in FIG. 2, a network device (e.g. a gNB) may transmit dedicated configuration for beam failure recovery to a terminal equipment in advance. When a beam failure recovery is performed by the terminal equipment, the terminal equipment transmits a beam failure recovery request to the network device, and receives a response from the network device to the request.

The dedicated configuration provided by the network device for the terminal equipment may include, for example, at least one of the following:
a parameter for determining beam failure, such as *NrOfBeamFailureInstance*;
a threshold used to determine whether a beam is a candidate beam, such as *CandidateBeam Threshold;*
a random access resource used to transmit a beam failure recovery request, such as *PRACH-resource-dedicated-BFR*;
a preamble index used to transmit a beam failure recovery request, such as *ra-PreambleIndexConfig-BFR*;
a limit to transmitting a beam failure recovery request, such as *Preamble Trans Max-BFR*;
configuration information used to receive a response from a network device, such as *Response WindowSize-BFR* and *Beam-Failure-Recovery-Response-CORESET.*

It should be noted that the dedicated configuration used for beam failure recovery is illustrated above. However, this disclosure is not limited thereto; for example, other parameters may also be included, and reference may be made to related techniques for the dedicated configuration used for beam failure recovery, which shall not be described herein any further.

On the other hand, in the NR, the 5G system supports a radio link failure and reestablishment procedure. For example, a problem of physical layer, a problem of random access and a problem of radio link control (RLC) may all make a radio resource control (RRC) layer of the terminal equipment determine radio link failure.

For another example, in a case where a radio link failure occurs at a primary base station and security has been activated, the terminal equipment will initiate a connection reestablishment procedure to recover connection. After the connection is reestablished, the terminal equipment may transmit a radio link failure report to the network device. When the radio link failure occurs at a secondary base station, the terminal equipment will transmit a secondary cell group (SCG) failure information message *(SCGFailurelnformation* message) to the primary base station, and the network device decides to release or replace the secondary base station.

For another example, both the radio link failure report and the SCG failure information message include a failure type, and may provide the network device with a cause of the failure, such as a physical layer problem, or a random access problem, etc.

The embodiments of this disclosure shall be described below by taking an NR system as an example; however, this disclosure is not limited thereto, and may also be applicable to any systems in which similar problems exist.

### Embodiment 1

The embodiments of this disclosure provide a configuration method for beam failure recovery.

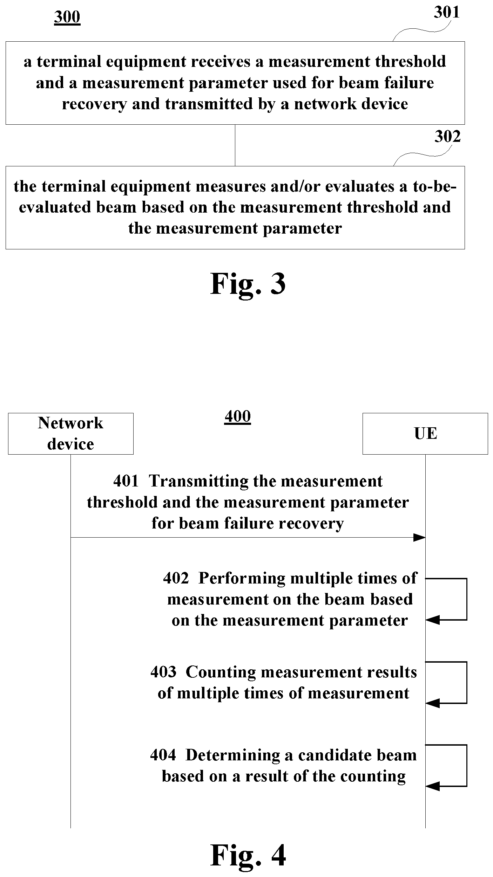

FIG. 3 is a schematic diagram of the configuration method for beam failure recovery of the embodiment of this disclosure, in which a case at a terminal equipment side is shown. As shown in FIG. 3, a configuration method 300 for beam failure recovery includes:
step 301: a terminal equipment receives a measurement threshold and a measurement parameter used for beam failure recovery and transmitted by a network device; and
step 302: the terminal equipment measures and/or evaluates a to-be-evaluated beam based on the measurement threshold and the measurement parameter.

In an embodiment, the network device may include the measurement threshold and the measurement parameter in dedicated configuration for beam failure recovery. The measurement parameter includes at least one of the following: a duration in which a beam measurement result is greater than the measurement threshold, the number of instances by which the beam measurement result is above the measurement threshold, a measurement mode for measuring a beam, and a filter factor for filtering the measurement result. However, this disclosure is not limited thereto, and other parameters may be included.

Thus, by introducing one or more measurement parameters, the network device is able to better control the terminal equipment to perform physical layer measurement, or is able to better control the terminal equipment to process the measurement result of the physical layer. In this way, in determining whether a beam is a candidate beam, the terminal equipment is able to use measurement results of a unified standard, thereby improving accuracy of the candidate beam.

In an embodiment, the terminal equipment may determine that the to-be-evaluated beam is a candidate beam used for the beam failure recovery based on the measurement threshold and a measurement result of the to-be-evaluated beam.

In an embodiment, the to-be-evaluated beam may include at least one of the following: a beam having an available measurement result, a beam having an available measurement result other than a serving beam, a beam configured with a resource for beam failure recovery and having an available measurement result, and a beam configured with a resource for beam failure recovery and having an available measurement result other than a serving beam.

In an embodiment, the measurement mode is determined by the following information: the number of measurement instances in one time of measurement and spacing between two consecutive measurement instances, or a duration of one time of measurement and spacing between two consecutive measurement instances.

In an embodiment, the terminal equipment may perform one or more times of measurement on the beam based on the measurement mode.

FIG. 4 is another schematic diagram of the configuration method for beam failure recovery of the embodiment of this disclosure, in which a case at the terminal equipment side and a network device side is shown. As shown in FIG. 4, a configuration method 400 for beam failure recovery includes:
step 401: the network device transmits the measurement threshold and the measurement parameter for beam failure recovery to the terminal equipment;
step 402: the terminal equipment performs beam measurement for multiple times of based on the measurement parameter.

As shown in FIG. 4, the configuration method 400 for beam failure recovery may further include:
step 403: the terminal equipment counts measurement results of multiple times of measurement;
for example, the terminal equipment may average all measurement results of the beam; however, this disclosure is not limited thereto, and other counting methods may also be used, such as summation, and variance calculation;
step 404: the terminal equipment determines that the beam is a candidate beam used for the beam failure recovery based on a result of the counting.

For example, when the result of the counting is greater than the measurement threshold, the terminal equipment determines that the beam is a candidate beam for the beam failure recovery.

For another example, within a period of time, when multiple measurement values of the to-be-evaluated beam are all greater than the measurement threshold, or an average value of the multiple measurement values is greater than the measurement threshold, the to-be-evaluated beam is determined as a candidate beam for the beam failure recovery. The period of time may be, for example, "a duration in which the beam measurement result is greater than the measurement threshold" in the measurement parameter, or may be a time determined by the terminal equipment itself; however, this disclosure is not limited thereto.

For a further example, in a case where multiple continuous measurement values of the to-be-evaluated beam are all greater than the measurement threshold, or the average value of the multiple continuous measurement values is greater than the measurement threshold, the to-be-evaluated beam is determined as a candidate beam for the beam failure recovery. The number of the multiple continuous measurement values may be, for example, "the number of instances by which the beam measurement result is greater than the measurement threshold" in the measurement parameter, or may be a number determined by the terminal equipment itself; however, this disclosure is not limited thereto.

It should be noted that FIG. 4 only schematically illustrates the embodiment of this disclosure; however, this disclosure is not limited thereto. For example, an order of execution of the steps may be appropriately adjusted, and furthermore, some other steps may be added, or some steps therein may be reduced. And appropriate variants may be made by those skilled in the art according to the above contents, without being limited to what is contained in FIG. 4.

In another embodiment, the terminal equipment may further perform filter calculation on measurement results of multiple times of measurement based on the filtering factor, and determine that the to-be-evaluated beam is a candidate beam used for the beam failure recovery based on a result of the filter calculation.

It should be noted that the above embodiments may be implemented independently, or may be implemented by combining two or more thereof, which shall be illustrated below by way of examples.

For example, when the network device configures the terminal equipment with a measurement threshold *CandidateBeamThreshold* for evaluating whether a beam is a candidate beam, a parameter "a duration in which the beam measurement result is greater than the measurement threshold" may further be configured, which is denoted by, for example, *Time-To-Transmit.* In a case where a beam failure occurs, the terminal equipment evaluates all to-be-evaluated beams. If an average measurement value or all measurement values of a beam within the time *Time-To-Transmit* are greater than the measurement threshold *CandidateBeamThreshold,* the terminal equipment deems that the beam is a candidate beam for the beam failure recovery; otherwise, it deems that the beam is not a candidate beam.

For another example, when the network device configures the terminal equipment with a measurement threshold *CandidateBeamThreshold* for evaluating whether a beam is a candidate beam, a parameter "the number of instances by which the measurement result of the beam is greater than the measurement threshold" is further configured, which is denoted by, for example, *NrOfBeamAvailiabilityInstance.* In a case where a beam failure occurs, the terminal equipment evaluates all to-be-evaluated beams. And if a number of consecutive *NrOfBeamAvailiability Instance* of measurement values of a beam are all greater than the threshold *CandidateBeamThreshold,* or an average value of the number of consecutive *NrOfBeamAvailiabilityInstance* measurement values is greater than the threshold *CandidateBeamThreshold,* the terminal equipment deems that the beam is a candidate beam for the beam failure recovery; otherwise, it deems that beam is not a candidate beam.

It should be noted that the to-be-evaluated beam here may be at least one of the following beams: a beam having an available measurement result, a beam having an available measurement result other than a serving beam, a beam configured with a resource for beam failure recovery and having an available measurement result, and a beam configured with a resource for beam failure recovery and having an available measurement result other than a serving beam; however, this disclosure is not limited thereto.

For a further example, the network device configures the terminal equipment with a measurement mode *PatternOfMeasInstance,* a duration *Time-To-Transmit* in which the beam measurement result is greater than the threshold and a filter factor *k*. Wherein, the measurement mode *PatternOfMeasInstance* includes a total number *NrOfMeasInstance* of measurement instances in one time of measurement evaluation and an interval *GapOfMeasInstance* between two consecutive measurement instances. The terminal equipment may obtain a series of measurement results of a to-be-evaluated beam according to the measurement mode, and perform filter calculation with the filter factor *k*, and obtained calculation results are used to evaluate the beam. If the calculation results within the time *time-to-transmit* are all higher than the preset threshold, the terminal equipment deems that the beam is a candidate beam and may be used for beam failure recovery; otherwise, it deems that the beam is not a candidate beam.

It can be seen from the above embodiments that the terminal equipment receives the measurement threshold and the measurement parameter used for beam failure recovery and transmitted by the network device. Hence, the terminal equipment is able to obtain an accurate beam measurement result and accurately determine the candidate beam, and unsuccessful beam failure recovery may be reduced.

### Embodiment 2

The embodiments of this disclosure provide an indication method for beam failure recovery.

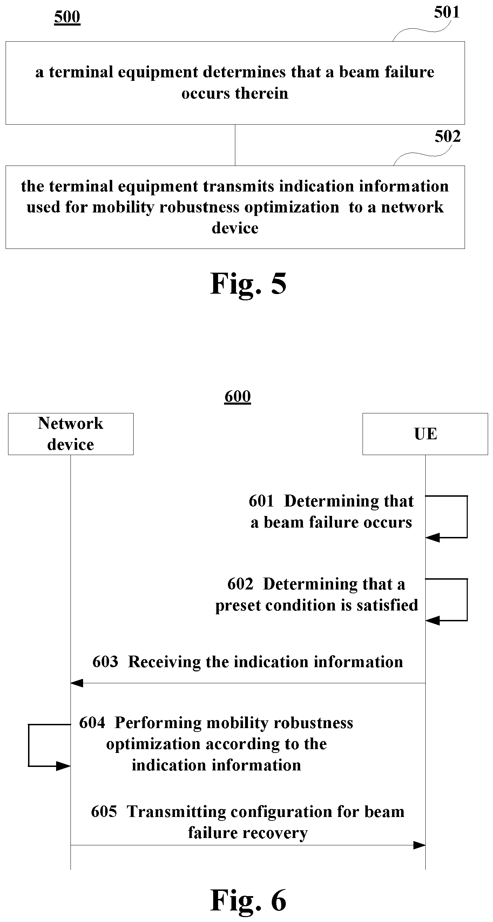

FIG. 5 is a schematic diagram of the indication method for beam failure recovery of the embodiment of this disclosure, in which a case at a terminal equipment side is shown. As shown in FIG. 5, an indication method 500 for beam failure recovery includes:
step 501: a terminal equipment determines that a beam failure occurs; and
step 502: the terminal equipment transmits indication information used for mobility robustness optimization to a network device.

In an embodiment, the mobility robustness optimization may include: maintaining or adjusting a parameter of beam failure recovery. For example, according to the indication information, the network device adjusts a threshold *CandidateBeamThreshold* used for determining a candidate beam.

In an embodiment, the indication information includes at least one of the following: beam identification information, beam failure indication, beam failure recovery success indication, beam failure recovery failure indication, and available measurement information. However, this disclosure in not limited thereto, and other information may also be included.

Therefore, the network may collect information reported by one or more terminal equipments, and may determine whether a parameter (such as *CandidateBeamThreshold*) configured by a connected users within a service range is appropriate. If the configured parameter is not appropriate and occurrence of unsuccessful beam failure recovery is resulted in a large number of terminal equipments, the network device may adjust the parameter, so that the terminal equipments may be controlled to obtain more accurate measurement results.

In one embodiment, the beam identification information may include: an index of a synchronization signal block (SSB) to which a beam corresponds, and/or an identity (ID) of a channel state information reference signal (CSI-RS) to which a beam corresponds. The beam to which the beam identification information corresponds includes at least one of the following: a serving beam before occurrence of beam failure recovery, a candidate beam capable of being used for beam failure recovery determined by the terminal equipment, and a candidate beam that is not finally used when the terminal equipment transmits a beam failure recovery request by using multiple candidate beams.

For example, the beam identification information may be represented by:

| |
|---|
| ```
         BeamInfo CHOICE {
                SSBIndex
           } CSIID
``` |

Or, the beam identification information may be represented by:

| |
|---|
| ```
         BeamInfo SEQUENCE {
                SSBIndex
          } CSIID
``` |

In one embodiment, the indication information may be carried in at least one of the following report or messages: a radio link failure report, a secondary cell group failure information message, a primary cell group report message, and a secondary cell group report message; however, this disclosure is not limited thereto.

At least one piece of the beam failure indication, the beam failure recovery success indication and the beam failure recovery failure indication may be carried in an information element (IE)/information elements, such as, *rlf-Cause* or *failureType* IE, of a radio link failure report and/or a secondary cell group failure information message; however, this disclosure is not limited thereto.

For example, in a case where the indication information is included in a radio link failure (RLF) report, a part of contents of the report may be represented by:

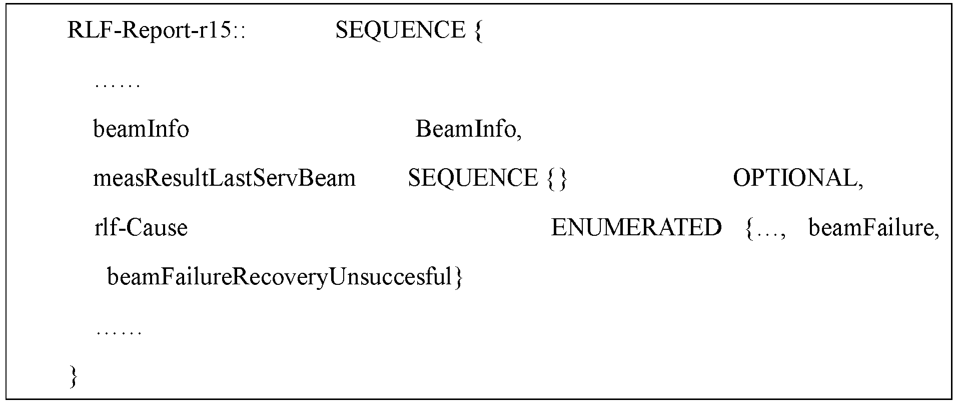

It should be noted that *beamFailure* in *rlf-Cause* corresponds to the beam failure indication, and *beamFailureRecoveryUnsuccesful* corresponds to the beam failure recovery failure indication. The embodiment of this disclosure includes a case where one of the parameters is increased to a value of *rlf-Cause,* and also includes a case where two or more of the parameters are increased to the value of *rlf-Cause.*

For another example, when the beam failure or the bean recovery failure triggers report of the secondary cell group radio link failure, a part of contents of the report may be represented by:

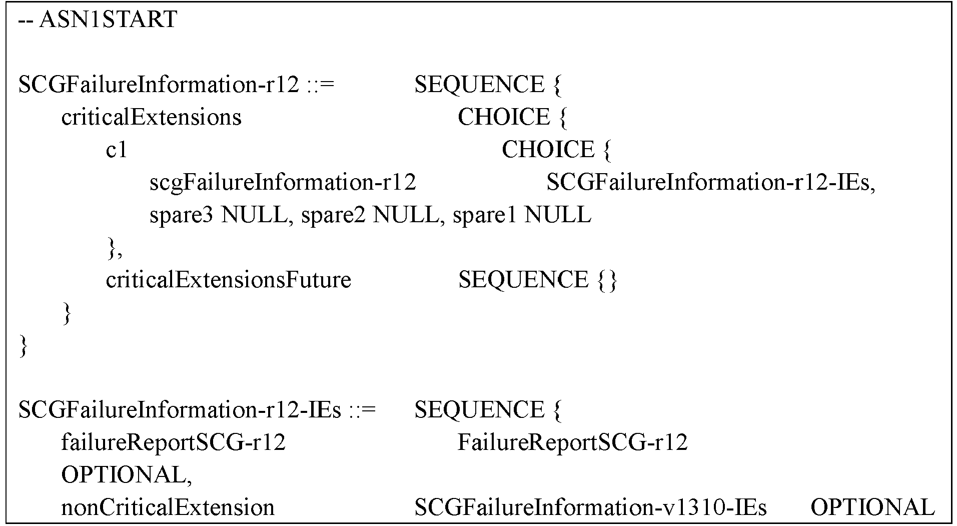

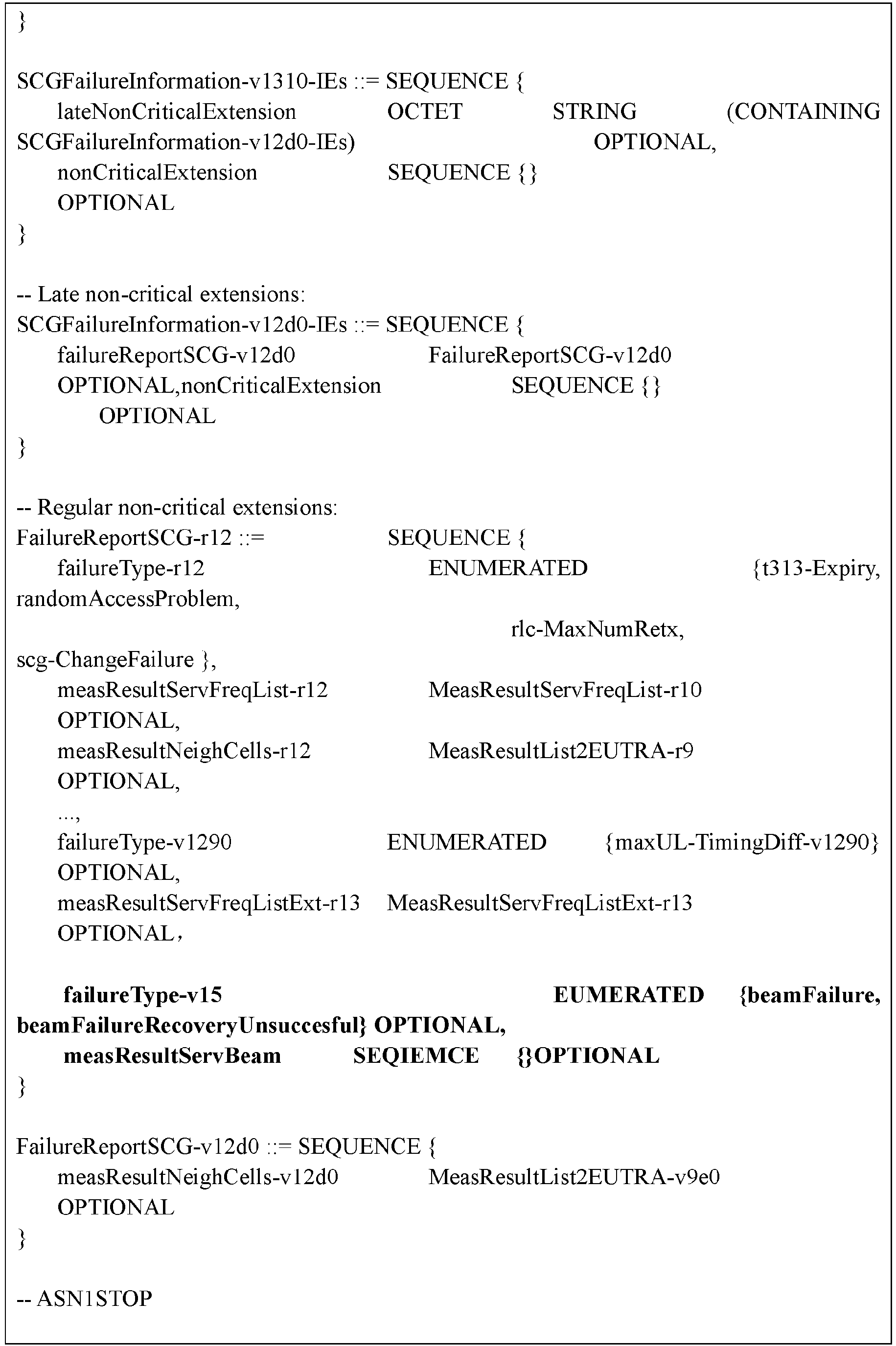

It should be noted that *beamFailure* in *failure Type-v15* corresponds to the beam failure indication, and *beamFailureRecoveryUnsuccesful* corresponds to the beam failure recovery failure indication.

For a further example, when the beam failure or the bean recovery failure does not trigger the report of the secondary cell group radio link failure, a new type of failure may be defined:

| |
|---|
| The UE shall determine the SCG failure type as follows: |
| ...... |
| 1> else, if the UE initiates transmission of the SCGFailureInformation message due to beam failure: |
| 2> determine the failure type as beamFailure; |
| 1> else, if the UE initiates transmission of the SCGFailureInformation message due to unsuccessful beam failure recovery: |
| 2>determine the failure type as beamFailureRecoveryUnsuc; |
| ...... |

It should be noted that *beamFailure* in *failureType* corresponds to the beam failure indication, and *beamFailureRecoveryUnsuccesful* corresponds to the beam failure recovery failure indication. The embodiment of this disclosure includes a case where one of the parameters is increased to a value of *failureType,* and also includes a case where two or more of the parameters are increased to the value *offailureType.*

For yet another example, the indication information may also be taken as new report information of the UE and applied to the primary cell group and/or the secondary cell group. If it is the primary cell group, when a UE information request (*UEInformationRequest*) message transmitted by the network device includes a beam *beam-ReportReq* or a beam failure *bf-ReportReq* or a beam failure recovery *bfr-ReportReq* report request, if there is a corresponding report, the UE may include a corresponding report in a UE information response (*UEInformationResponse*) message.

If it is a secondary cell group, the reported information may be processed, for example, in at least one of the following manners that:
the UE first transmits the information to a serving primary base station, and the serving primary base station determines a base station to which the information corresponds, and transmits a received message or a composed new message to the determined base station;
the UE directly transmits the information to a serving secondary base station, and the serving secondary base station determines a base station to which the information correspond, and if the information belongs to another base station, transfers a received message or a composed new message to the determined base station; and
the UE first transmits the information to the serving secondary base station through the serving primary base station, and the serving secondary base station determines a base station to which the information correspond, and if the information belongs to another base station, transfers a received message or a composed new message to the determined base station.

It should be noted that how to transmit the indication information is schematically described above; however, this disclosure is not limited thereto; for example, one of the above manners may be performed separately, or two or more of the above manners may be combined, or other manners may be used.

FIG. 6 is another schematic diagram of the indication method for beam failure recovery of the embodiment of this disclosure, in which a case at the terminal equipment side and the network device side is shown. As shown in FIG. 6, an indication method 600 for beam failure recovery includes:
step 601: a terminal equipment determines that a beam failure occurs;
step 602: the terminal equipment determines that a condition is satisfied.

In an embodiment, the condition includes at least one of the following: that beam failure recovery does not succeed, that beam failure occurs, that beam failure recovery succeeds but multiple beams are used for transmitting a beam failure recovery request, and that a network request is received; however, this disclosure is not limited thereto;
for example, in a case where a beam failure occurs in the secondary base station, the terminal equipment will be directly triggered to report; and in a case where a beam failure occurs in the primary base station, if a supplementary signaling radio bearer (SRB) is not supported, the terminal equipment is unable to directly transmit a report, but is able to perform the following operations that: the terminal equipment reselects a cell to reconstruct first, and during the reconstruction process, informs the network device that there is failure report information available; based on the indication of the terminal equipment, the network device may request the terminal equipment to report relevant information; and based on the request of the network device, the terminal equipment reports the failure indication, etc.;
step 603: the terminal equipment transmits indication information to the network device;
step 604: the network device performs mobility robustness optimization according to the indication information;

for example, after receiving the indication information reported by one or more terminal equipments, a network device 1 may adjust a threshold *candidateBeam Threshold* used for determining the candidate beam according to the indication information; for another example, after receiving the indication information reported by one or more terminal equipments, the network device 1 may transmit it to a network device 2, and the network device 2 adjusts *candidateBeamThreshold* according to the indication information;
step 605: the terminal equipment receives configuration for beam failure recovery transmitted by the network device.

For example, after a terminal equipment 1 transmits the indication information to the network device 1 in step 603, the network device 1 may perform the mobility robustness optimization in step 604, and then transmit the dedicated configuration for beam failure recovery to the terminal equipment 1, the dedicated configuration containing the adjusted threshold *candidateBeam Threshold.*

For another example, after the terminal equipment 1 transmits the indication information to the network device 1 in step 603, the network device 1 may perform the mobility robustness optimization in step 604, and then transmit the dedicated configuration for beam failure recovery to another terminal equipment, a terminal equipment 2, the dedicated configuration containing the adjusted threshold *candidateBeamThreshold.*

That is, the terminal equipment that transmits the indication information in step 603 and the terminal equipment that receives the configuration in step 605 may be the same equipment or different equipments; and the network device that receives the indication information in step 603, the network device that performs mobility robustness optimization in step 604 and the network device that transmits the configuration in step 605 may be the same device or different devices; and this disclosure is not limited thereto.

It should be noted that FIG. 6 only schematically illustrates the embodiment of this disclosure; however, this disclosure is not limited thereto. For example, an order of execution of the steps may be appropriately adjusted, and furthermore, some other steps may be added, or some steps therein may be reduced. And appropriate variants may be made by those skilled in the art according to the above contents, without being limited to what is contained in FIG. 6.

It can be seen from the above embodiments that the terminal equipment transmits the indication information used for the mobility robustness optimization to the network device. Hence, the terminal equipment is able to obtain an accurate beam measurement result according to the configuration of the network device, and accurately determine the candidate beam, and unsuccessful beam failure recovery may be reduced.

### Embodiment 3

The embodiments of this disclosure provide a configuration apparatus for beam failure recovery. The apparatus may be, for example, a terminal equipment, or may be one or more components or assemblies configured in a terminal equipment. Contents in the embodiments identical to those in Embodiment 1 shall not be described herein any further.

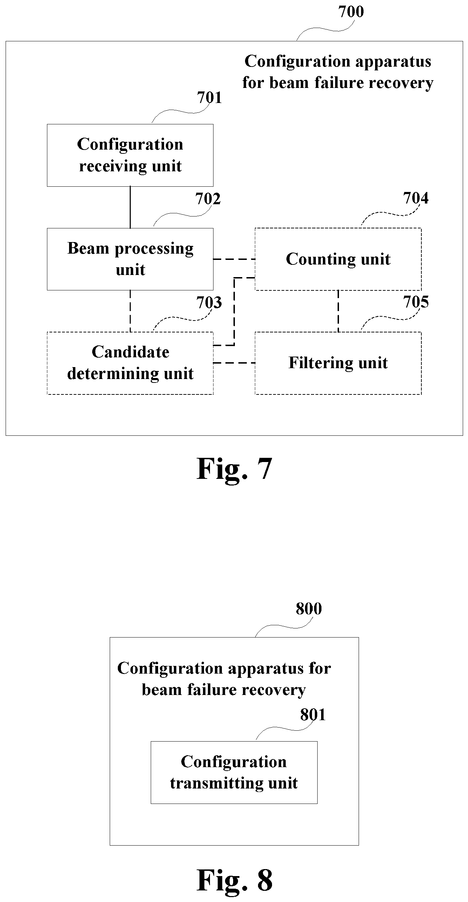

FIG. 7 is a schematic diagram of the configuration apparatus for beam failure recovery of the embodiment of this disclosure. As shown in FIG. 7, a configuration apparatus 700 for beam failure recovery includes:
a configuration receiving unit 701 configured to receive a measurement threshold and a measurement parameter used for beam failure recovery and transmitted by a network device; and
a beam processing unit 702 configured to measure and/or evaluate a to-be-evaluated beam based on the measurement threshold and the measurement parameter.

As shown in FIG. 7, the configuration apparatus 700 for beam failure recovery may further include:
a candidate determining unit 703 configured to determine that the to-be-evaluated beam is a candidate beam used for the beam failure recovery based on the measurement threshold and a measurement result of the to-be-evaluated beam.

In one embodiment, the to-be-evaluated beam includes at least one of the following beams: a beam having an available measurement result, a beam having an available measurement result other than a serving beam, a beam configured with a resource for beam failure recovery and having an available measurement result, and a beam configured with a resource for beam failure recovery and having an available measurement result other than a serving beam.

In one embodiment, the measurement parameter includes at least one of the following: a duration in which a beam measurement result is greater than the measurement threshold, the number of instances of which a beam measurement result is greater than the measurement threshold, a measurement mode for measuring a beam, and a filtering factor for filtering a measurement result.

In one embodiment, the measurement mode is determined by the following information: the number of measurement instances in one time of measurement and spacing between two consecutive measurement instances, or a duration of one time of measurement and spacing between two consecutive measurement instances.

In one embodiment, the beam processing unit 702 may measure the to-be-evaluated beam for one or more times based on the measurement mode.

In one embodiment, as shown in FIG. 7, the configuration apparatus 700 for beam failure recovery may further include:
a counting unit 704 configured to count measurement results of multiple times of measurement;
and the candidate determining unit 703 is further configured to determine that the to-be-evaluated beam is a candidate beam used for the beam failure recovery based on a result of the counting.

In one embodiment, the candidate determining unit 703 is configured to determine that the to-be-evaluated beam is a candidate beam used for the beam failure recovery when multiple measurement values of the to-be-evaluated beam within a period of time are greater than the measurement threshold, or an average value of multiple measurement values is greater than the measurement threshold, and/or
determine that the to-be-evaluated beam is a candidate beam used for the beam failure recovery when multiple consecutive measurement values of the to-be-evaluated beam are greater than the measurement threshold, or an average value of multiple consecutive measurement values is greater than the measurement threshold.

In one embodiment, as shown in FIG. 7, the configuration apparatus 700 for beam failure recovery may further include:
a filtering unit 705 configured to perform filter calculation on measurement results of multiple times of measurement based on the filtering factor;
and the candidate determining unit 703 is further configured to determine that the to-be-evaluated beam is a candidate beam used for the beam failure recovery based on a result of the filter calculation.

The embodiment of this disclosure provides a configuration apparatus for beam failure recovery. The apparatus may be, for example, a network device, or may be one or more components or assemblies configured in a network device.

FIG. 8 is a schematic diagram of the configuration apparatus for beam failure recovery of the embodiment of this disclosure. As shown in FIG. 8, a configuration apparatus 800 for beam failure recovery includes:
a configuration transmitting unit 801 configured to transmit a measurement threshold and a measurement parameter for beam failure recovery to a terminal equipment.

It should be noted that the components or modules related to this disclosure are only described above. However, this disclosure is not limited thereto, and the configuration apparatus 700 for beam failure recovery or the configuration apparatus 800 for beam failure recovery may further include other components or modules, and reference may be made to related techniques for particulars of these components or modules.

Furthermore, for the sake of simplicity, connection relationships between the components or modules or signal profiles thereof are only illustrated in FIG. 7 or 8. However, it should be understood by those skilled in the art that such related techniques as bus connection may be adopted. And the above components or modules may be implemented by hardware, such as a processor, a memory, a transmitter, and a receiver, etc., which are not limited in the embodiment of this disclosure.

It can be seen from the above embodiments that the terminal equipment receives the measurement threshold and the measurement parameter used for beam failure recovery and transmitted by the network device. Hence, the terminal equipment is able to obtain an accurate beam measurement result and accurately determine the candidate beam, and unsuccessful beam failure recovery may be reduced.

### Embodiment 4

The embodiments of this disclosure provide an indication apparatus for beam failure recovery. The apparatus may be, for example, a terminal equipment, or may be one or more components or assemblies configured in a terminal equipment. Contents in this embodiment identical to those in Embodiment 2 shall not be described herein any further.

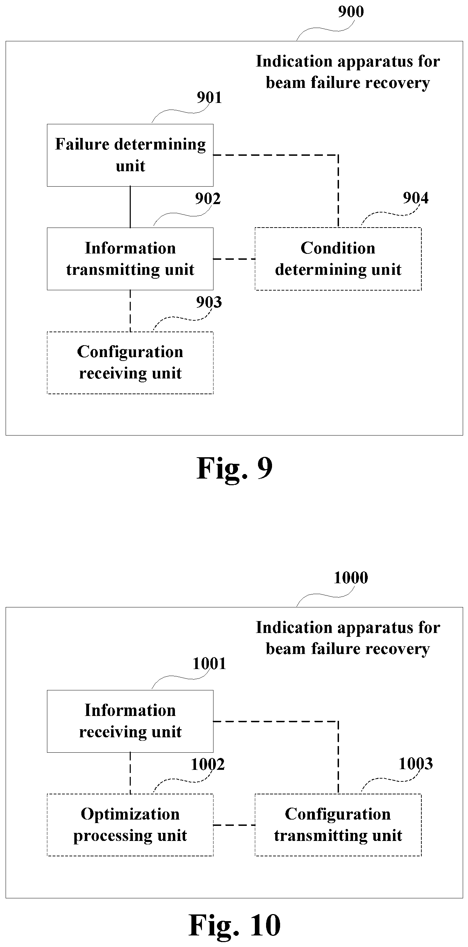

FIG. 9 is a schematic diagram of the indication apparatus for beam failure recovery of the embodiment of this disclosure. As shown in FIG 9, an indication apparatus 900 for beam failure recovery includes:
a failure determining unit 901 configured to determine that a beam failure occurs in a terminal equipment; and
an information transmitting unit 902 configured to transmit indication information used for mobility robustness optimization to a network device.

In an embodiment, the mobility robustness optimization includes: maintaining or adjusting a parameter of beam failure recovery.

As shown in FIG. 9, the indication apparatus 900 for beam failure recovery may further include:
a configuration receiving unit 903 configured to receive configuration for beam failure recovery transmitted by the network device.

In one embodiment, the indication information includes at least one of the following: beam identification information, beam failure indication, beam failure recovery success indication, beam failure recovery failure indication, and available measurement information.

In one embodiment, the beam identification information includes: an index of a synchronization signal block (SSB) to which a beam corresponds, and/or an identity (ID) of a channel state information reference signal (CSI-RS) to which a beam corresponds.

In one embodiment, the beam to which the beam identification information corresponds includes at least one of the following: a serving beam before occurrence of beam failure recovery, a candidate beam capable of being used for beam failure recovery determined by the terminal equipment, and a candidate beam that is not finally used when the terminal equipment transmits a beam failure recovery request by using multiple candidate beams.

In one embodiment, the indication information may be carried in at least one of the following report or messages: a radio link failure report, a secondary cell group failure information message, a primary cell group report message, and a secondary cell group report message; however, this disclosure is not limited thereto.

In one embodiment, at least one piece of the beam failure indication, the beam failure recovery success indication and the beam failure recovery failure indication may be carried in an information element/information elements of a radio link failure report and/or a secondary cell group failure information message.

In one embodiment, as shown in FIG. 9, the indication apparatus 900 for beam failure recovery may further include:
a condition determining unit 904 configured to determine that a predefined condition is satisfied;
and the information transmitting unit 902 is further configured to transmit the indication information to the network device when the condition is satisfied.

In one embodiment, the condition includes at least one of the following: that beam failure recovery does not succeed, that beam failure occurs, that beam failure recovery succeeds but multiple beams are used for transmitting a beam failure recovery request, and that a network request is received.

The embodiment of this disclosure provides an indication apparatus for beam failure recovery. The apparatus may be, for example, a network device, or may be one or more components or assemblies configured in a network device.

FIG. 10 is a schematic diagram of the indication apparatus for beam failure recovery of the embodiment of this disclosure. As shown in FIG. 10, an indication apparatus 1000 for beam failure recovery includes:
an information receiving unit 1001 configured to receive indication information used for mobility robustness optimization transmitted by a terminal equipment.

As shown in FIG. 10, the indication apparatus 1000 for beam failure recovery may further include:
an optimization processing unit 1002 configured to perform mobility robustness optimization based on the indication information; and
a configuration transmitting unit 1003 configured to transmit configuration used for beam failure recovery to the terminal equipment.

It should be noted that the components or modules related to this disclosure are only described above. However, this disclosure is not limited thereto, and the indication apparatus 900 or 1000 for beam failure recovery may further include other components or modules, and reference may be made to related techniques for particulars of these components or modules.

Furthermore, for the sake of simplicity, connection relationships between the components or modules or signal profiles thereof are only illustrated in FIG. 9 or 10. However, it should be understood by those skilled in the art that such related techniques as bus connection may be adopted. And the above components or modules may be implemented by hardware, such as a processor, a memory, a transmitter, and a receiver, which are not limited in the embodiment of this disclosure.

It can be seen from the above embodiments that the terminal equipment transmits the indication information used for the mobility robustness optimization to the network device. Hence, the terminal equipment is able to obtain an accurate beam measurement result according to the configuration of the network device, and accurately determine the candidate beam, and unsuccessful beam failure recovery may be reduced.

### Embodiment 5

The embodiments of this disclosure provide a communication system, and reference may be made to FIG. 1, with contents identical to those in embodiments 1-4 being not going to be described herein any further. In an embodiment, the communication system 100 may include:
a network device 101 serving for one or more terminal equipments and configured with the configuration apparatus 800 for beam failure recovery as described in Embodiment 3 or the indication apparatus 1000 for beam failure recovery as described in Embodiment 4; and
a terminal equipment 102 configured with the configuration apparatus 700 for beam failure recovery as described in Embodiment 3 or the indication apparatus 900 for beam failure recovery as described in Embodiment 4.

The embodiment of this disclosure further provides a network device, which may be, for example, a base station. However, this disclosure is not limited thereto, and it may also be another network device.

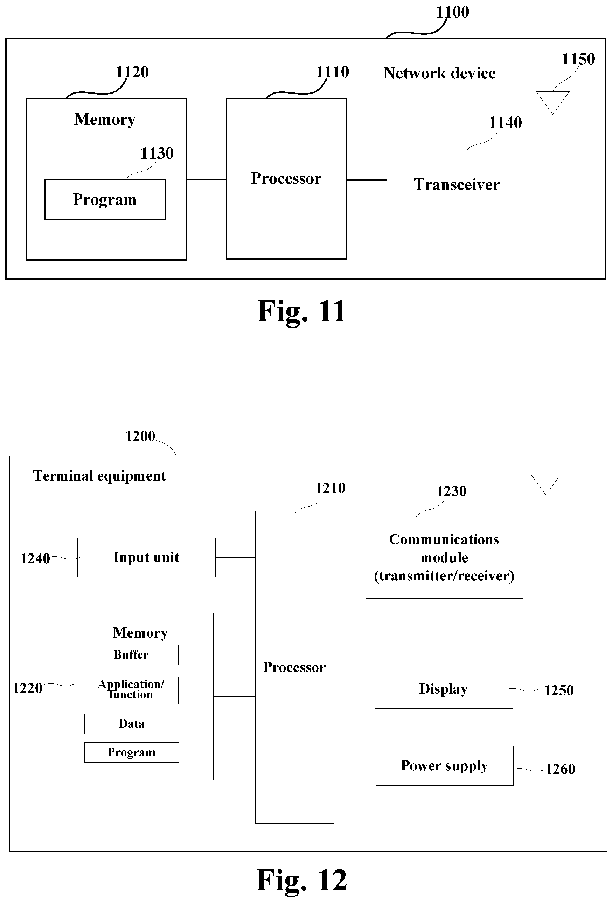

FIG. 11 is a schematic diagram of a structure of the network device of the embodiment of this disclosure. As shown in FIG. 11, a network device 1100 may include a processor 1110 (such as a central processing unit (CPU)) and a memory 1120, the memory 1120 being coupled to the processor 1110. The memory 1120 may store various data, and furthermore, it may store a program 1130 for data processing, and execute the program 1130 under control of the processor 1110.

For example, the processor 1110 may be configured to execute the program 1130 to carry out the configuration method for beam failure recovery described in Embodiment 1. For example, the processor 1110 may be configured to execute the following control: transmitting a measurement threshold and a measurement parameter for beam failure recovery to a terminal equipment.

For another example, the processor 1110 may be configured to execute the program 1130 to carry out the indication method for beam failure recovery described in Embodiment 2. For example, the processor 1110 may be configured to execute the following control: receiving indication information used for mobility robustness optimization transmitted by the terminal equipment in a case of occurrence of beam failure; and performing mobility robustness optimization based on the indication information.

Furthermore, as shown in FIG. 11, the network device 1100 may include a transceiver 1140, and an antenna 1150, etc. Functions of the above components are similar to those in the relevant art, and shall not be described herein any further. It should be noted that the network device 1100 does not necessarily include all the parts shown in FIG. 11, and furthermore, the network device 1100 may include parts not shown in FIG. 11, and the relevant art may be referred to.

The embodiment of this disclosure further provides a terminal equipment; however, this disclosure is not limited thereto, and it may also be another equipment.

FIG. 12 is a schematic diagram of the terminal equipment of the embodiment of this disclosure. As shown in FIG. 12, a terminal equipment 1200 may include a processor 1210 and a memory 1220, the memory 1220 storing data and a program and being coupled to the processor 1210. It should be noted that his figure is illustrative only, and other types of structures may also be used, so as to supplement or replace this structure and achieve a telecommunications function or other functions.

For example, the processor 1210 may be configured to execute a program to carry out the configuration method for beam failure recovery described in Embodiment 1. For example, the processor 1210 may be configured to execute the following control: receiving a measurement threshold and a measurement parameter used for beam failure recovery and transmitted by a network device; and measuring and/or evaluating a to-be-evaluated beam based on the measurement threshold and the measurement parameter.

In one embodiment, the processor 1210 may further be configured to execute the following control: determining that the to-be-evaluated beam is a candidate beam used for the beam failure recovery based on the measurement threshold and a measurement result of the to-be-evaluated beam.

In one embodiment, the to-be-evaluated beam includes at least one of the following: a beam having an available measurement result, a beam having an available measurement result other than a serving beam, a beam configured with a resource for beam failure recovery and having an available measurement result, and a beam configured with a resource for beam failure recovery and having an available measurement result other than a serving beam.

In one embodiment, the measurement parameter includes at least one of the following: a duration in which a beam measurement result is greater than the measurement threshold, the number of instances by which the beam measurement result is greater than the measurement threshold, a measurement mode for measuring a beam, and a filter factor for filtering the measurement result.

In one embodiment, the measurement mode is determined by the following information: the number of measurement instances in one time of measurement and spacing between two consecutive measurement instances, or a duration of one time of measurement and spacing between two consecutive measurement instances.

In one embodiment, the processor 1210 may further be configured to execute the following control: performing one or more times of measurement on the beam based on the measurement mode.

In one embodiment, the processor 1210 may further be configured to execute the following control: counting measurement results of multiple times of measurement; and determining that the to-be-evaluated beam is a candidate beam used for the beam failure recovery based on a result of the counting.

In one embodiment, the processor 1210 may further be configured to execute the following control: determining that the to-be-evaluated beam is a candidate beam used for the beam failure recovery when multiple measurement values of the to-be-evaluated beam within a period of time are greater than the measurement threshold, or an average value of multiple measurement values is greater than the measurement threshold, and/or
determining that the to-be-evaluated beam is a candidate beam used for the beam failure recovery when multiple consecutive measurement values of the to-be-evaluated beam are greater than the measurement threshold, or an average value of multiple consecutive measurement values is greater than the measurement threshold.

In one embodiment, the processor 1210 may further be configured to execute the following control: performing filter calculation on measurement results of multiple times of measurement based on the filtering factor; and determining that the to-be-evaluated beam is a candidate beam used for the beam failure recovery based on a result of the filter calculation.

For another example, the processor 1210 may be configured to execute a program to carry out the indication method for beam failure recovery described in Embodiment 2. For example, the processor 1210 may be configured to execute the following control: determining that a beam failure occurs in the terminal equipment; and transmitting indication information used for mobility robustness optimization to a network device.

In one embodiment, the mobility robustness optimization includes: maintaining or adjusting a parameter of beam failure recovery.

In one embodiment, the processor 1210 may further be configured to execute the following control: receiving configuration for beam failure recovery transmitted by the network device.

In one embodiment, the indication information includes at least one of the following: beam identification information, beam failure indication, beam failure recovery success indication, beam failure recovery failure indication, and available measurement information.

In one embodiment, the beam identification information includes: an index of a synchronization signal block (SSB) to which a beam corresponds, and/or an identity (ID) of a channel state information reference signal (CSI-RS) to which a beam corresponds.

In one embodiment, the beam to which the beam identification information corresponds includes at least one of the following: a serving beam before occurrence of beam failure recovery, a candidate beam capable of being used for beam failure recovery determined by the terminal equipment, and a candidate beam that is not finally used when the terminal equipment transmits a beam failure recovery request by using multiple candidate beams.

In one embodiment, the indication information is carried in at least one of the following report or messages: a radio link failure report, a secondary cell group failure information message, a primary cell group report message, and a secondary cell group report message.

In one embodiment, at least one piece of the beam failure indication, the beam failure recovery success indication and the beam failure recovery failure indication is carried in an information element/information elements of a radio link failure report and/or a secondary cell group failure information message.

In one embodiment, the processor 1210 may further be configured to execute the following control: determining that a predefined condition is satisfied; and transmitting the indication information to the network device when the condition is satisfied.

In one embodiment, the condition includes at least one of the following: that beam failure recovery does not succeed, that beam failure occurs, that beam failure recovery succeeds but multiple beams are used for transmitting a beam failure recovery request, and that a network request is received.

As shown in FIG. 12, the terminal equipment 1200 may further include a communication module 1230, an input unit 1240, a display 1250, and a power supply 1260; wherein functions of the above components are similar to those in the relevant art, which shall not be described herein any further. It should be noted that the terminal equipment 1200 does not necessarily include all the parts shown in FIG. 12, and the above components are not necessary. Furthermore, the terminal equipment 1200 may include parts not shown in FIG. 12, and the relevant art may be referred to.

An embodiment of this disclosure provides a computer readable program, which, when executed in a network device, will cause the network device to carry out the configuration method for beam failure recovery described in Embodiment 1 or the indication method for beam failure recovery described in Embodiment 2.

An embodiment of this disclosure provides a storage medium, including a computer readable program, which will cause a network device to carry out the configuration method for beam failure recovery described in Embodiment 1 or the indication method for beam failure recovery described in Embodiment 2.

An embodiment of this disclosure provides a computer readable program, which, when executed in a terminal equipment, will cause the terminal equipment to carry out the configuration method for beam failure recovery described in Embodiment 1 or the indication method for beam failure recovery described in Embodiment 2.

An embodiment of this disclosure provides a storage medium, including a computer readable program, which will cause a terminal equipment to carry out the configuration method for beam failure recovery described in Embodiment 1 or the indication method for beam failure recovery described in Embodiment 2.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory, etc.

The methods/apparatuses described with reference to the embodiments of this disclosure may be directly embodied as hardware, software modules executed by a processor, or a combination thereof. For example, one or more functional block diagrams and/or one or more combinations of the functional block diagrams shown in the drawings may either correspond to software modules of procedures of a computer program, or correspond to hardware modules. Such software modules may respectively correspond to the steps shown in the drawings. And the hardware module, for example, may be carried out by firming the soft modules by using a field programmable gate array (FPGA).

The soft modules may be located in an RAM, a flash memory, an ROM, an EPROM, and EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in the drawings may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of this disclosure. Various variants and modifications may be made by those skilled in the art according to the principle of this disclosure, and such variants and modifications fall within the scope of this disclosure.

## Claims

1. A configuration apparatus for beam failure recovery, comprising:
a configuration receiving unit configured to receive a measurement threshold and a measurement parameter used for beam failure recovery and transmitted by a network device; and
a beam processing unit configured to measure and/or evaluate a to-be-evaluated beam based on the measurement threshold and the measurement parameter.

2. The apparatus according to claim 1, wherein the apparatus further comprises:
a candidate determining unit configured to determine that the to-be-evaluated beam is a candidate beam used for the beam failure recovery based on the measurement threshold and a measurement result of the to-be-evaluated beam.

3. The apparatus according to claim 1, wherein the to-be-evaluated beam comprises at least one of the following beams: a beam having an available measurement result, a beam having an available measurement result other than a serving beam, a beam configured with a resource for beam failure recovery and having an available measurement result, and a beam configured with a resource for beam failure recovery and having an available measurement result other than a serving beam.

4. The apparatus according to claim 1, wherein the measurement parameter comprises at least one of the following: a duration in which a beam measurement result is greater than the measurement threshold, the number of instances of which a beam measurement result is greater than the measurement threshold, a measurement mode for measuring a beam, and a filtering factor for filtering a measurement result.

5. The apparatus according to claim 4, wherein the measurement mode is determined by the following information: the number of measurement instances in one time of measurement and spacing between two consecutive measurement instances, or a duration of one time of measurement and spacing between two consecutive measurement instances.

6. The apparatus according to claim 4, wherein the to-be-evaluated beam is measured for one or more times based on the measurement mode.

7. The apparatus according to claim 2, wherein the apparatus further comprises:
a counting unit configured to count measurement results of multiple times of measurement;
and the candidate determining unit is further configured to determine that the to-be-evaluated beam is a candidate beam used for the beam failure recovery based on a result of the counting.

8. The apparatus according to claim 7, wherein the candidate determining unit is configured to determine that the to-be-evaluated beam is a candidate beam used for the beam failure recovery when multiple measurement values of the to-be-evaluated beam within a period of time are greater than the measurement threshold, or an average value of multiple measurement values is greater than the measurement threshold, and/or
determine that the to-be-evaluated beam is a candidate beam used for the beam failure recovery when multiple consecutive measurement values of the to-be-evaluated beam are greater than the measurement threshold, or an average value of multiple consecutive measurement values is greater than the measurement threshold.

9. The apparatus according to claim 2, wherein the apparatus further comprises:
a filtering unit configured to perform filter calculation on measurement results of multiple times of measurement based on the filtering factor;
and the candidate determining unit is further configured to determine that the to-be-evaluated beam is a candidate beam used for the beam failure recovery based on a result of the filter calculation.

10. An indication apparatus for beam failure recovery, comprising:
a failure determining unit configured to determine that a beam failure occurs in a terminal equipment; and
an information transmitting unit configured to transmit indication information used for mobility robustness optimization to a network device.

11. The apparatus according to claim 10, wherein the mobility robustness optimization comprises: maintaining or adjusting a parameter of beam failure recovery.

12. The apparatus according to claim 10, wherein the apparatus further comprises:
a configuration receiving unit configured to receive configuration for beam failure recovery transmitted by the network device.

13. The apparatus according to claim 10, wherein the indication information comprises at least one of the following: beam identification information, beam failure indication, beam failure recovery success indication, beam failure recovery failure indication, and available measurement information.

14. The apparatus according to claim 13, wherein the beam identification information comprises: an index of a synchronization signal block to which a beam corresponds, and/or an identity (ID) of a channel state information reference signal to which a beam corresponds.

15. The apparatus according to claim 13, wherein the beam to which the beam identification information corresponds comprises at least one of the following: a serving beam before occurrence of beam failure recovery, a candidate beam capable of being used for beam failure recovery determined by the terminal equipment, and a candidate beam that is not finally used when the terminal equipment transmits a beam failure recovery request by using multiple candidate beams.

16. The apparatus according to claim 10, wherein the indication information is carried in at least one of the following report or messages: a radio link failure report, a secondary cell group failure information message, a primary cell group report message, and a secondary cell group report message.

17. The apparatus according to claim 13, wherein at least one piece of the beam failure indication, the beam failure recovery success indication and the beam failure recovery failure indication is carried in an information element/information elements of a radio link failure report and/or a secondary cell group failure information message.

18. The apparatus according to claim 10, wherein the apparatus further comprises:
a condition determining unit configured to determine that a predefined condition is satisfied;
and the information transmitting unit is further configured to transmit the indication information to the network device when the condition is satisfied.

19. The apparatus according to claim 18, wherein the condition comprises at least one of the following: that beam failure recovery does not succeed, that beam failure occurs, that beam failure recovery succeeds but multiple beams are used for transmitting a beam failure recovery request, and that a network request is received.

20. A communication system, comprising:
a terminal equipment, comprising the configuration apparatus for beam failure recovery as claimed in claim 1, or the indication apparatus for beam failure recovery as claimed in claim 10.
